# EUROPEAN PATENT SPECIFICATION

(11) **EP 4 223 434 B1**
(45) Date of publication and mention of the grant of the patent: **25.12.2024**
(21) Application number: 22155419.9
(22) Date of filing: 07.02.2022
(51) Int. Cl.: B22F 5/10, B22F 7/06, B22F 7/08, B22F 10/28, G01K 1/14

(54) **PART WITH EMBEDDED SENSOR**
TEIL MIT EINGEBETTETEM SENSOR
PIÈCE AVEC CAPTEUR INTÉGRÉ

(43) Date of publication of application: 09.08.2023
(73) Proprietor: Voestalpine Additive Manufacturing Center GmbH, 40549 Düsseldorf (DE)
(72) Inventor: GARCIA-BRAGADO, Federico, 40235 Düsseldorf (DE); SEHRT, Jan, 44801 Bochum (DE); MÜLLER, Inka, 44801 Bochum (DE); HANTKE, Nick, 44801 Bochum (DE)
(74) Representative: Lambsdorff & Lange Patentanwälte Partnerschaft mbB

(56) References cited:
- US-A1- 2017 231 415

## Description

### Technical Field

This disclosure relates to a sensor-equipped part, and in particular to the technology of embedding a sensor in a metal body.

### Background

Monitoring essential parts of, e.g., tools or machines requires the acquisition of sensor data that are meaningful for process reliability and/or functionality of the part. To this end, it is already known to embed sensors such as thermocouples in such parts. This allows the temperature of the part to be measured so that malfunction or damage can be detected at an early stage and corrected if possible.

In many cases, the parts to be monitored are under high load conditions, e.g. high operating temperatures, high thermal cycling, high mechanical loading, strong vibrations, etc. Such conditions often impair or degrade the interface between the part and the sensor, thereby rendering the monitoring slower or unreliable. Further, conventional techniques often do not provide for sufficient design variability for placing the sensor near critical locations or surfaces of the part due to required space and/or reduction of part performance.

WO 2018 / 194 482 A1 discloses embedding a gauge in a gauge cavity portion of an additive manufactured part by affixing the gauge to the material of the part by gluing.

EP 3 068 994 B1 discloses an article for use in a gas turbine engine. The article includes a multi-layer wall structure and an embedded sensor bonded to the wall structure.

US 2021 / 0 230 076 A1 discloses a method of embedding a sensor in a 3D-printed SiC part.

US 2017 / 0 231 415 A1 describes a sensor-equipped part comprising a metal body and a channel extending into and ending in the metal body. A cured material holds the sensor in place in the channel.

### Summary

According to an aspect of the disclosure a sensor-equipped part includes a metal body and a first channel extending into and ending in the metal body. The sensor-equipped part further includes a second channel extending into the metal body and connecting to the first channel at a junction near the end of the first channel. A sensor is disposed in the first channel and a curable material in its cured state holds the sensor in place in the first channel. The second channel is configured to allow the curable material to be introduced through the junction into the first channel.

According to another aspect of the disclosure a method of manufacturing a sensor-equipped part includes forming a first channel in a metal body, the first channel extending into and ending in the metal body. A second channel extending into the metal body and connecting to the first channel at a junction near the end of the first channel is formed in the metal body. A sensor is disposed in the first channel. A curable material is introduced via the second channel into the first channel to embed at least a portion of the sensor. The curable material is cured to hold the sensor in place in the first channel.

### Brief description of the drawings

The elements of the drawings are not necessarily to scale relative to each other. Like reference numerals designate corresponding similar parts. The features of the various illustrated examples can be combined unless they exclude each other and/or can be selectively omitted if not described to be necessarily required. Examples are depicted in the drawings and are exemplarily detailed in the description which follows.
Figure 1 is a cross-sectional view of an exemplary metal body including first and second channels.
Figure 2 illustrates a sensor inserted in the first channel of the metal body of Figure 1.
Figure 3 is a cross-sectional view of an exemplary design of a dome forming the end of the first channel.
Figure 4 is a cross-sectional view of a first example of a sensor-equipped part including a curable material introduced via the second channel into the first channel of the metal body of Figure 3.
Figure 5 is a cross-sectional view of a second example of a sensor-equipped part.
Figure 6 is a cross-sectional view of a third example of a sensor-equipped part.
Figure 7 is a flowchart illustrating stages of an exemplary method of manufacturing a sensor-equipped part.

### Detailed description

As used in this specification, layers or elements illustrated as adjacent layers or elements do not necessarily be directly contacted together; intervening elements or layers may be provided between such layers or elements. However, in accordance with the disclosure, elements or layers illustrated as adjacent layers or elements may in particular be directly contacted together, i.e. no intervening elements or layers are provided between these layers or elements, respectively.

The words "over" or "beneath" with regard to a part, element or material layer formed or located or disposed or arranged or placed "over" or "beneath" a surface may be used herein to mean that the part, element or material layer be located (e.g. placed, formed, arranged, disposed, placed, etc.) "directly on" or "directly under", e.g. in direct contact with, the implied surface. The word "over" or "beneath" used with regard to a part, element or material layer formed or located or disposed or arranged or placed "over" or "beneath" a surface may, however, either be used herein to mean that the part, element or material layer be located (e.g. placed, formed, arranged, deposited, etc.) "indirectly on" or "indirectly under" the implied surface, with one or more additional parts, elements or layers being arranged between the implied surface and the part, element or material layer.

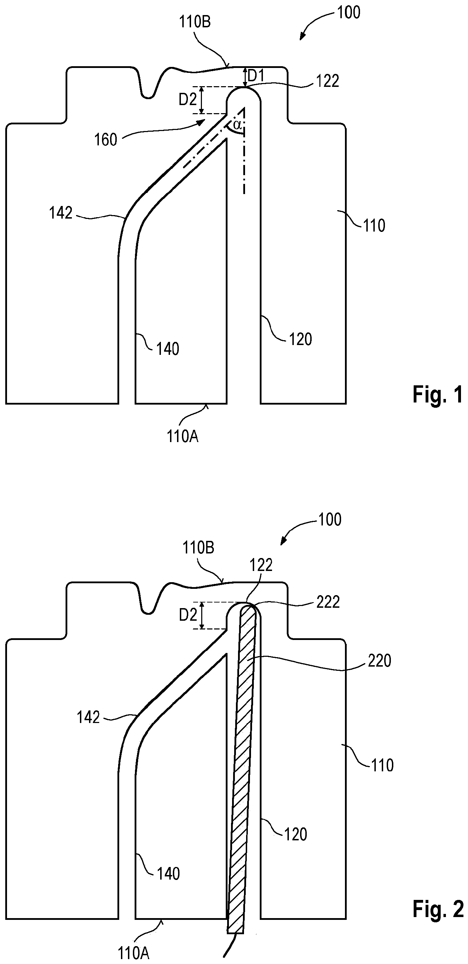

Figure 1 illustrates a cross-sectional view of an exemplary metal body 110. The metal body 110 may be a part based on or made of, e.g., iron, steel, aluminum, titanium, copper, nickel or cobalt or an alloy of any of these metals.

The metal body 110 may form a component (e.g. insert, transmission, actuator, etc.) or the entirety of a mechanical equipment such as, e.g., a tool or a machine. In particular, the metal body 110 may form a tool or tool insert for High Pressure Die Casting (HPDC), Low Pressure Die Casting (LPDC) or Plastic Injection Moulding (PIM). Other applications are specifically components of apparatus used in the oil and/or gas industry. In operation, the metal body 110 may be subjected to high load conditions, e.g. high operating temperatures, high thermal cycling, high mechanical loading, strong vibrations, etc.

The metal body 110 is provided with a first channel 120 and a second channel 140. The first channel 120 opens at, e.g., a first surface 110A of the metal body 110. The first channel 120 extends into the metal body 110 and terminates at an end 122 of the first channel 120 within the metal body 110.

Similarly, the second channel 140 is open and accessible at a surface of the metal body 110, e.g. at the same first surface 110A as the first channel 120. The second channel 140 extends into the metal body 110 and connects to the first channel 120 at a junction 160 located near the end 122 of the first channel 120.

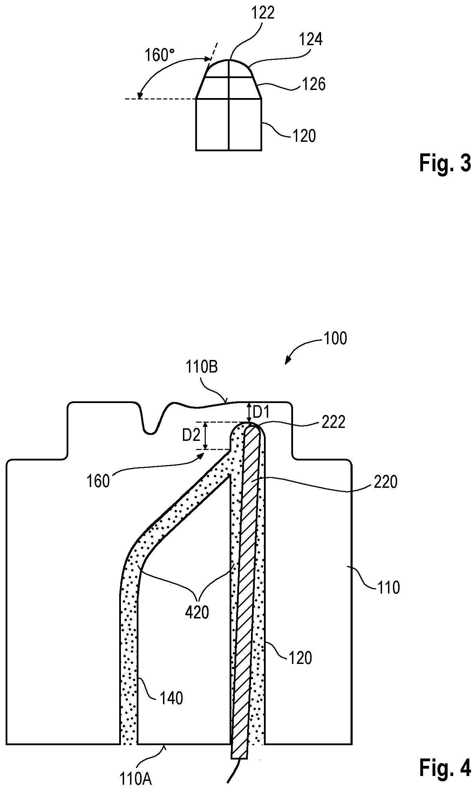

The end 122 of the first channel 120 may, e.g., be close to a second surface 110B of the metal body 110. The second surface 110B may, e.g., be a functional surface of the part 100 (see e.g. Figure 4). The meaning of the term "functional surface" may comprise, inter alia, a working surface of a tool or machine part (such as, e.g., a punching tool, a die, an actuator, etc.) or a forming surface of a tool or tool insert (such as, e.g., a die casting mold or a plastic injection mold) or an effective surface of a machine part (such as, e.g., a turbine blade surface, etc.) or, e.g., a manifold for oil and gas industry.

A distance D1 between the functional surface 110B and the end 122 of the first channel 120 may, e.g., be in a range between 1 mm and 100 mm. In specific cases, where to sensor 220 is intended to be placed close to the functional surface 110B, the distance D1 may, e.g., be in a range between 1 mm and 10 mm, more specifically between 2 mm and 8 mm or 4 mm and 6 mm. As will be discussed in further detail below, the smaller the distance D1, the more accurate and faster the sensor measurement (e.g., temperature measurement), but increasing mechanical stress may occur in the residual wall between the end 122 of the first channel 120 and the second surface 110B, which may ultimately prevent further reduction of D1.

For example, for plastic injection molding tools a distance D1 of about 2 mm may be feasible, while for high pressure die casting, the operation of the tool may require a wall thickness D1 of about 8 mm.

A distance D2 between the end 122 of the first channel 120 and the junction 160 (more specifically, the upper end of the mouth of the second channel 140 into the first channel 120) may preferably be in the range between 2 mm and 30 mm, for example. Although the distance D2 may also be zero, a minimum distance D2 of, e.g., 2 mm helps to avoid that the sensor 220 (see Figure 2) may inadvertently enter the second channel 140 and becomes misplaced when inserted into the first channel 120. On the other hand, at greater distances from D2 approaching, for example, 30 mm, it may become difficult to avoid entrapped air at the end 122 of the first channel 120 when introducing the curable material 420 (see Figures 4 to 6).

In Figure 1, the first channel 120 is straight along its entire length, for example. However, as will be described further below, it is also possible that the first channel 120 is curved along at least a portion of its extension, for example.

The second channel 140 is in communication with the first channel 120 at the junction 160. The first channel 120 and the second channel 140 may, e.g., be inclined with respect to each other at an angle of equal to or less than or greater than 90° or 80° or 70° or 60° at the junction 160. In Figure 1 the angle is denoted by α and refers to the angle between the axes of the first and second channels 120, 140 at their point of intersection. The smaller the angle α the better is the filling behavior of the first channel 120 by curable material as described further below with reference to Figure 4. Further, it is less likely that the sensor 220 may inadvertently enter the second channel 140 and becomes misplaced when inserted into the first channel 120.

In the example of Figure 1 the second channel 140 may include a curved or bent portion 142 that allows the second channel 140 to approach the first channel 120. This optional bent portion 142 may have a radius equal to or greater than, e.g., 2.5 mm. In other examples the second channel 140 may be substantially straight along its entire extension. In this case, the second channel 140 may open obliquely to the first surface 110A, for example.

A cross-sectional area of the first channel 120 may be greater than a cross-sectional area of the second channel 140. By way of example, the second channel 140 may have a cross-sectional area equal to or greater than a disc-shape of a diameter of 1.0 or 1.5 or 2.0 mm. The first channel 120 may have a cross-sectional area equal to or greater than a disc-shape of a diameter of e.g. 2.0 or 2.5 or 3.0 mm. A maximum cross-sectional area of the first channel 120 may correspond to a disc-shape of diameter 15 mm and/or a maximum cross-sectional area of the second channel 140 may correspond to a disc-shape of diameter 10 mm.

The cross-sections of the first channel 120 and/or the second channel 140 may but need not to be circular disc-shaped. Further, the cross-sectional shape of the first and/or second channels 120, 140 may but do not need to have a constant cross-sectional shape along their longitudinal extension. It is also possible that the cross-sectional shape varies along the longitudinal extension, e.g. may be larger near the entrance of the channels 120, 140 and then tapers down to final cross-sectional shape. The figures recited above with respect to the cross-sectional area may, e.g., apply as minimum or maximum cross sectional area quantities along the respective channel extension.

As mentioned above, Figure 2 illustrates the metal body 110 with a sensor 220 inserted into the first channel 120. The sensor 220 may be a thermocouple configured for temperature measurement. In other examples, the sensor 220 may be a pressure sensor or an acceleration sensor or an positional sensor or an optical sensor, etc.

The sensor 220 has a sensor tip 222. The sensor tip 222 may, e.g., be placed in contact (abutment) to the end 122 of the first channel 120.

The first channel 120 may end in a dome of a rounded shape. The dome of a rounded shape provides for self-centering of the sensor 220 during integration. In other words, a dome of rounded shape at the end 122 of the first channel 120 helps to position the sensor 220 accurately in a defined and reproducible position which may be closest to the (functional) second surface 110B. Further, the rounded shape of the dome at the end 122 of the first channel 120 provides for a better stress distribution (stability) under load and for improved filling behavior of the first channel 120, as will be described in the following.

In one example, the dome may have a continuous rounded or, for example, spherical shape. The transition between the rounded dome and the sidewall of the first channel 120 may be with or without a kink.

Referring to Figure 3 illustrating another exemplary design of the dome, the dome may include or be composed of a conical portion 126 and a rounded cap portion 124. The conical portion 126 may be, e.g., straight. An angle between a normal to the channel wall and the conical portion 126 may be, e.g., in a range between 100 and 165°, and in particular, for example, about 160° (see Figure 3). The transition between the conical portion 126 and the side wall of the first channel 120 may be, e.g., with or without a kink. Such design supports self-centering and generates less stress in the metal body 110 compared to sharp-edged, drilled holes.

Further, the wall surface of the dome may be formed with a greater roughness than the wall surface of the side wall of the first channel 120. It has been shown that a greater roughness in the dome improves contact with the sensor 220. For example, the roughness Ra of the wall surface of the dome may be in a range between 10 and 40 um. For example, excellent results were obtained with Ra = 30 um. The roughness of the side wall surface of the first channel 120 (and also, for example, of the second channel 140) may be equal to or less than 10 um, with an exemplary value of, e.g., Ra = 6-7 um. The roughness Ra was measured according to standard DIN EN ISO 4287.

Referring to Figure 4, a curable material 420 is used to hold the sensor 220 in place in the first channel 120. The second channel 140 is configured to allow the curable material 420 to be introduced through the junction 160 into the first channel 120.

More specifically, e.g. after disposing the sensor 220 in the first channel 120, the curable material 420 is introduced via the second channel 140 into the first channel 120. Since the junction 160 of the first channel 120 and the second channel 140 is close to the end 122 of the first channel 120, the curable material 420 enters into the first channel 120 near the tip 222 of the sensor 220. The curable material 420, in its uncured state, is liquid or plastically deformable so as to embed the sensor 220 to all sides at least at its upper portion and, optionally, along its entire length within the first channel 120.

The curable material 420, in its uncured state, can be injected into the second channel 140 at the opening of the second channel 140 in the first surface 110A of the metal body 110. In its uncured state, during filling into the second channel 140, the curable material 420 may have a high viscosity.

Due to the provision of the second channel 140, at least an upper portion of the first channel 120 may be completely filled by the curable material 420 without the formation of voids in the curable material 420. Voids (e.g. air pockets) would significantly decrease the mechanical stability and robustness of the fitting of the sensor 220 in the metal body 110 and could degrade the sensor function due to, e.g., reduced sensory (e.g. thermal or mechanical) contact.

As shown in Figure 4, the mouth of the second channel 140 into the first channel 120 at junction 160 may be positioned such that the tip 222 of the sensor 220 is located above the upper end of the mouth, i.e. above the junction 160.

The curable material 420 may, e.g., be based on cement or another curable compound such as, e.g., glue, silicone, etc. The curable material 420 may optionally include metal filler particles. However, the metal content may be equal to or less than 30% in volume. Preferably, the curable material 420 (e.g. cement) is non-metallic at all. For instance, the thermal conductivity of the curable material 420 in its cured (i.e. solidified) state may be in a range of 0.65 to 1.8 W/(m*K).

The CTE (Coefficient of Thermal Expansion) of the curable material 420, in its cured (solidified) state, may be equal to or greater than the CTE of the metal material of the metal body 110. This feature may lead to better heat transfer from the metal body 110 to e.g. a temperature sensor 220 and therefore more sensitive sensory information.

After the curable material 420 has been introduced via the second channel 140 into the first channel 120 to embed at least a portion of the sensor 220, the curable material 420 is cured (solidified) to hold the sensor in place in the first channel 120. By curing the curable material 420, the sensor 220 may be anchored unmovably and, e.g., permanently (i.e. non-detachably) in the first channel 120.

Curing (i.e. solidifying) of the curable material 420 may, e.g., be caused by heating and/or by chemical cross-linking depending on the nature of the curable material 420.

It is to be noted that the sensor 220 need not be welded or otherwise secured to the end 122 of the first channel 120 to be held in place. In particular, the curable material 420 may be, for example, the only fastening means to hold the sensor 220 in place in the first channel 120.

For example, the sensor 220 may be a temperature sensor, e.g., a sheath thermocouple. Temperature monitoring can be improved because it is not based on a point contact between the temperature sensor 220 and the wall of the first channel 120, but a defined and time constant thermal contact between these two elements is ensured. This facilitates accurate and timely tracking of temperature changes, especially when the part 100 is subjected to movement, vibration or shock.

The first and/or second channels 120, 140 may be formed by conventional machining, e.g. drilling and/or etching. In other examples, the first and/or second channels 120, 140 are formed during manufacturing of the part 100. For example, the metal body 110 may be formed by additive manufacturing (AM). Especially, the metal body 110 may be formed by powder bed fusion AM. Fe-based powders (e.g. Uddeholm CORRAX, BÖHLER W360 AMPO) or Al-based powders may be used, for example.

AM offers a high degree of design freedom and therefore allows to create bent or curved channel designs and/or channel designs with varying cross-sectional shape along their longitudinal extension (the cross-sectional area may, e.g., be widened near the entrance of the channels 120, 140) and/or channel designs with small cross-sectional areas as described above (which can often not be manufactured by drilling) and/or junctions 160 or channel ends 122 of rounded shapes.

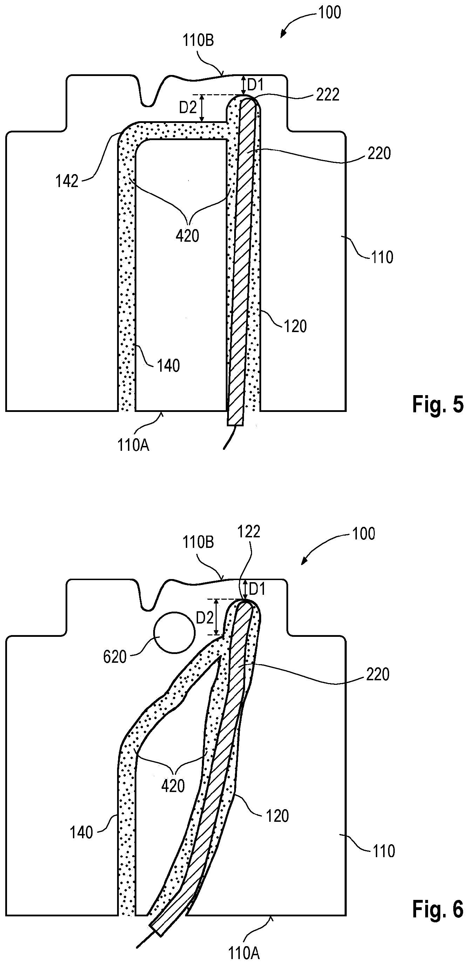

More complex channel designs are illustrate in Figures 5 and 6, for example. In Figure 5 the second channel 140 has a bent portion or curve 142, which may be bent by an angle of, e.g., equal to or greater than 70° or 80° or 90°. This allows the first channel 120 and the second channel 140 to be arranged a short distance apart.

Referring to Figure 6, the first channel 120 and/or the second channel 140 may be bent or non-linear shaped along a substantial or majority part of their length. Such complex design may be optimized to position the tip 222 of the temperature sensor 220 at a desired location, e.g. at a location near the (functional) second surface 110B that is particularly critical with regard to operational safety or real-time process monitoring. In other examples, the desired tip location may be in a central part of the metal body 110.

Moreover, as illustrated in Figure 6, a bent design of the first channel 120 and/or the second channel 140 may be advantageous to position the tip 222 of the sensor 220 in the vicinity of a cooling media channel 620. That way, cooling media channel clogging or other faults in a cooling system can be detected at an early stage so that the operation of the tool or a machine part can be stopped in good time before damage occurs. It is to be noted that the description above in relation to the distance D1 between the tip 222 of the sensor 220 and a functional surface 110B of the metal body may analogously apply to a distance between the tip 222 of the sensor 220 and a the cooling media channel 620 (or even any other structure implemented in metal body 110). Therefore, to avoid reiteration, reference is made to the above description in terms of positioning the tip 222 close to a cooling media channel 620 or, e.g., any other structure implemented in metal body 110.

Generally, non-linear, bent, curved or tortuous channel courses may be helpful in introducing less additional stress into the metal body 110 when designing around existing structures, such as e.g. cooling media channels 620, and/or when positioning the tip 222 as close as possible to a particular location further into the metal body 110 or, for example, close to a functional surface 110B thereof. The bending can occur in one or different dimensions, i.e. relative to one, two or more sectional planes.

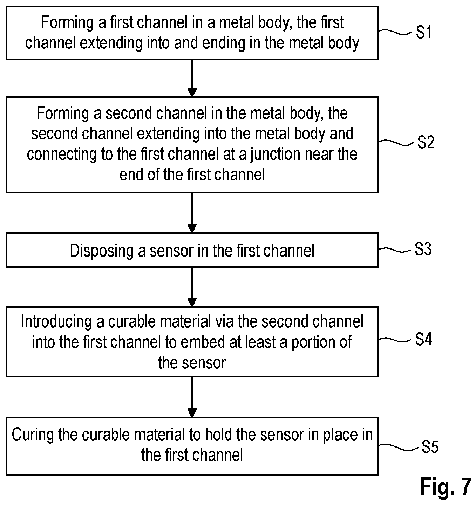

Figure 7 illustrates a flowchart of an exemplary process to manufacture a sensor-equipped part. At S1 a first channel is formed in a metal body, wherein the first channel extends into and ends in the metal body.

At S2 a second channel is formed in the metal body, the second channel extending into the metal body and connecting to the first channel at a junction near the end of the first channel.

S1 and S2 may be carried out during AM of the metal body or after manufacturing of the metal body by conventional machining such as, e.g., drilling and/or etching. S1 and S2 can be carried out at the same time (in particular, e.g., during AM) or sequentially in any order, i.e. S1 before S2 or S2 before S1.

At S3 the sensor is disposed in the first channel. This may be done by entering the sensor into the opening of the first channel and pushing the sensor forward until its tip touches the end of the first channel.

At S4 a curable material is introduced in its liquid state via the second channel through the junction into the first channel. The curable material may embed at least a portion (e.g. at least the upper 10 or 20 mm) of the sensor on all sides.

At S5 the curable material is cured to hold the sensor in place in the first channel. Curing transfers the curable material from the liquid state to the solid state.

Generally, in accordance with the disclosure herein, a sensor may be integrated in a robust and reproducible way in a part without requiring extra space except for the first channel (sensor channel) and the second channel (curable material channel). A performance superior to conventional solutions is obtained by using this technique. Further, the sensor integration cost is reduced.

## Claims

1. A sensor-equipped part (100), comprising
a metal body (110);
a first channel (120) extending into and ending in the metal body (110);
a second channel (140) extending into the metal body (110) and connecting to the first channel (120) at a junction near the end of the first channel (122);
a sensor (220) disposed in the first channel (120); and
a curable material (420) in its cured state holding the sensor (220) in place in the first channel, wherein the second channel (140) is configured to allow the curable material (420) to be introduced through the junction into the first channel (120).

2. The sensor-equipped part (100) of claim 1, wherein the metal body (110) has a functional suface (110B) and/or a cooling media channel (620) and the end of the first channel (122) is close to the functional surface (110B) and/or the cooling media channel (620).

3. The sensor-equipped part (100) of claim 2, wherein a distance between the functional surface (110B) or the cooling media channel (620) and the end of the first channel (122) is in a range between 2 mm and 100 mm.

4. The sensor-equipped part (100) of one of the preceding claims, wherein a distance between the end of the first channel (122) and the junction (160) is in a range between 2 mm and 30 mm.

5. The sensor-equipped part (100) of one of the preceding claims, wherein the first channel (120) is bent.

6. The sensor-equipped part (100) of one of the preceding claims, wherein the first channel (120) ends in a dome of a rounded shape.

7. The sensor-equipped part (100) of one of the preceding claims, wherein the first channel (120) and the second channel (140) are inclined with respect to each other at an angle of equal to or less than 90° or 80° or 70° at the junction (160).

8. The sensor-equipped part (100) of one of the preceding claims, wherein the second channel (140) is curved towards the first channel (120).

9. The sensor-equipped part (100) of one of the preceding claims, wherein cross sectional area of the first channel (120) is greater than a cross-sectional area of the second channel (140).

10. The sensor-equipped part (100) of one of the preceding claims, wherein the sensor is non-removably secured in the first channel (120) by the curable material (420) in its cured state.

11. The sensor-equipped part (100) of one of the preceding claims, wherein the metal body (110) is an additive manufactured body.

12. The sensor-equipped part (100) of one of the preceding claims, wherein the sensor (220) comprises a thermocouple.

13. The sensor-equipped part (100) of one of the preceding claims, wherein the curable material (420) is cement.

14. The sensor-equipped part (100) of one of the preceding claims, wherein the part is a tool or a tool insert or a machine part.

15. A method of manufacturing a sensor-equipped part (100), the method comprising:
forming a first channel (120) in a metal body (110), the first channel (120) extending into and ending in the metal body (110);
forming a second channel (140) in the metal body (110), the second channel (140) extending into the metal body (110) and connecting to the first channel (120) at a junction (160) near the end of the first channel (122);
disposing a sensor (220) in the first channel (120) introducing a curable material (420) the second channel (140) into the first channel (120) to embed at least a portion of the sensor (220); and
curing the curable material (420) to hold the sensor (220) in place in the first channel (120).

16. The method of claim 15, wherein forming the first channel (120) and/or forming the second channel (140) is carried out during using an additive manufacturing technique for forming the metal body (110).

## Patentansprüche

1. Ein mit einem Sensor ausgestattetes Teil (100), umfassend
einen Metallkörper (110);
einen ersten Kanal (120), der sich in den Metallkörper (110) hinein erstreckt und darin endet;
einen zweiten Kanal (140), der sich in den Metallkörper (110) hinein erstreckt und mit dem ersten Kanal (120) an einer Verbindungsstelle nahe dem Ende des ersten Kanals (122) verbunden ist;
einen im ersten Kanal (120) angeordneten Sensor (220); und ein aushärtbares Material (420) in seinem ausgehärteten Zustand, das den Sensor (220) in dem ersten Kanal an seinem Platz hält, wobei der zweite Kanal (140) so konfiguriert ist, dass das aushärtbare Material (420) durch die Verbindungsstelle in den ersten Kanal (120) eingeführt werden kann.

2. Das mit einem Sensor ausgestattete Teil (100) nach Anspruch 1, wobei der Metallkörper (110) eine Funktionsfläche (110B) und/oder einen Kühlmittelkanal (620) aufweist und das Ende des ersten Kanals (122) nahe an der Funktionsfläche (110B) und/oder dem Kühlmittelkanal (620) liegt.

3. Das mit einem Sensor ausgestattete Teil (100) nach Anspruch 2, wobei ein Abstand zwischen der Funktionsfläche (110B) oder dem Kühlmittelkanal (620) und dem Ende des ersten Kanals (122) in einem Bereich zwischen 2 mm und 100 mm liegt.

4. Das mit einem Sensor ausgestattete Teil (100) nach einem der vorhergehenden Ansprüche, wobei ein Abstand zwischen dem Ende des ersten Kanals (122) und der Verbindungsstelle (160) in einem Bereich zwischen 2 mm und 30 mm liegt.

5. Das mit einem Sensor ausgestattete Teil (100) nach einem der vorhergehenden Ansprüche, wobei der erste Kanal (120) gebogen ist.

6. Das mit einem Sensor ausgestattete Teil (100) nach einem der vorhergehenden Ansprüche, wobei der erste Kanal (120) in einer Kuppel mit einer abgerundeten Form endet.

7. Das mit einem Sensor ausgestattete Teil (100) nach einem der vorhergehenden Ansprüche, wobei der erste Kanal (120) und der zweite Kanal (140) an der Verbindungsstelle (160) in einem Winkel von gleich oder weniger als 90° oder 80° oder 70° zueinander geneigt sind.

8. Das mit einem Sensor ausgestattete Teil (100) nach einem der vorhergehenden Ansprüche, wobei der zweite Kanal (140) zum ersten Kanal (120) hin gekrümmt ist.

9. Das mit einem Sensor ausgestattete Teil (100) nach einem der vorhergehenden Ansprüche, wobei die Querschnittsfläche des ersten Kanals (120) größer ist als die Querschnittsfläche des zweiten Kanals (140).

10. Das mit einem Sensor ausgestattete Teil (100) nach einem der vorhergehenden Ansprüche, wobei der Sensor in dem ersten Kanal (120) durch das aushärtbare Material (420) in seinem ausgehärteten Zustand unlösbar befestigt ist.

11. Das mit einem Sensor ausgestattete Teil (100) nach einem der vorhergehenden Ansprüche, wobei der Metallkörper (110) ein additiv hergestellter Körper ist.

12. Das mit einem Sensor ausgestattete Teil (100) nach einem der vorhergehenden Ansprüche, wobei der Sensor (220) ein Thermoelement umfasst.

13. Das mit einem Sensor ausgestattete Teil (100) nach einem der vorhergehenden Ansprüche, wobei das aushärtbare Material (420) Zement ist.

14. Das mit einem Sensor ausgestattete Teil (100) nach einem der vorhergehenden Ansprüche, wobei das Teil ein Werkzeug oder ein Werkzeugeinsatz oder ein Maschinenteil ist.

15. Verfahren zur Herstellung eines mit einem Sensor ausgestatteten Teils (100), wobei das Verfahren umfasst:
Ausbilden eines ersten Kanals (120) in einem Metallkörper (110), wobei sich der erste Kanal (120) in den Metallkörper (110) hinein erstreckt und darin endet;
Ausbilden eines zweiten Kanals (140) in dem Metallkörper (110), wobei sich der zweite Kanal (140) in den Metallkörper (110) hinein erstreckt und mit dem ersten Kanal (120) an einer Verbindungsstelle (160) nahe dem Ende des ersten Kanals (122) verbunden ist;
Anordnen eines Sensors (220) im ersten Kanal (120);
Einbringen eines aushärtbaren Materials (420) über den zweiten Kanal (140) in den ersten Kanal (120), um mindestens einen Abschnitt des Sensors (220) einzubetten; und
Aushärten des aushärtbaren Materials (420), um den Sensor (220) im ersten Kanal (120) an seinem Platz zu halten.

16. Verfahren nach Anspruch 15, bei dem das Ausbilden des ersten Kanals (120) und/oder das Ausbilden des zweiten Kanals (140) während der Verwendung einer additiven Fertigungstechnik zum Ausbilden des Metallkörpers (110) durchgeführt wird.

## Revendications

1. Pièce (100) munie d'un capteur, comprenant
un corps métallique (110) ;
un premier canal (120) s'étendant jusqu'à l'intérieur du corps métallique (110) et se terminant dans celui-ci ;
un deuxième canal (140) s'étendant jusqu'à l'intérieur du corps métallique (110) et rejoignant le premier canal (120) au niveau d'une jonction proche de l'extrémité du premier canal (122) ;
un capteur (220) placé dans le premier canal (120) ; et
un matériau durcissable (420) maintenant, dans son état durci, le capteur (220) en place dans le premier canal, le deuxième canal (140) étant configuré pour permettre l'introduction du matériau durcissable (420) à travers la jonction jusqu'à l'intérieur du premier canal (120).

2. Pièce (100) munie d'un capteur selon la revendication 1, le corps métallique (110) étant pourvu d'une surface fonctionnelle (110B) et/ou d'un canal à agent de refroidissement (620) et l'extrémité du premier canal (122) étant proche de la surface fonctionnelle (110B) et/ou du canal à agent de refroidissement (620).

3. Pièce (100) munie d'un capteur selon la revendication 2, une distance entre la surface fonctionnelle (110B) ou le canal à agent de refroidissement (620) et l'extrémité du premier canal (122) étant comprise entre 2 mm et 100 mm.

4. Pièce (100) munie d'un capteur selon l'une des revendications précédentes, une distance entre l'extrémité du premier canal (122) et la jonction (160) étant comprise entre 2 mm et 30 mm.

5. Pièce (100) munie d'un capteur selon l'une des revendications précédentes, le premier canal (120) étant courbé.

6. Pièce (100) munie d'un capteur selon l'une des revendications précédentes, le premier canal (120) se terminant par un dôme d'une forme arrondie.

7. Pièce (100) munie d'un capteur selon l'une des revendications précédentes, le premier canal (120) et le deuxième canal (140) étant inclinés l'un par rapport à l'autre en formant un angle inférieur ou égal à 90° ou 80° ou 70° au niveau de la jonction (160).

8. Pièce (100) munie d'un capteur selon l'une des revendications précédentes, le deuxième canal (140) étant incurvé en direction du premier canal (120).

9. Pièce (100) munie d'un capteur selon l'une des revendications précédentes, la section transversale du premier canal (120) étant supérieure à la section transversale du deuxième canal (140).

10. Pièce (100) munie d'un capteur selon l'une des revendications précédentes, le capteur étant fixé à demeure dans le premier canal (120) par le matériau durcissable (420) dans son état durci.

11. Pièce (100) munie d'un capteur selon l'une des revendications précédentes, le corps métallique (110) étant un corps issu d'une fabrication additive.

12. Pièce (100) munie d'un capteur selon l'une des revendications précédentes, le capteur (220) comprenant un thermocouple.

13. Pièce (100) munie d'un capteur selon l'une des revendications précédentes, le matériau durcissable (420) étant un ciment.

14. Pièce (100) munie d'un capteur selon l'une des revendications précédentes, la pièce étant un outil ou un insert d'outil ou une pièce de machine.

15. Procédé de fabrication d'une pièce (100) munie d'un capteur, le procédé comprenant :
la formation d'un premier canal (120) dans un corps métallique (110), le premier canal (120) s'étendant jusqu'à l'intérieur du corps métallique (110) et se terminant dans celui-ci ;
la formation d'un deuxième canal (140) dans le corps métallique (110), le deuxième canal (140) s'étendant jusqu'à l'intérieur du corps métallique (110) et rejoignant le premier canal (120) au niveau d'une jonction (160) proche de l'extrémité du premier canal (122) ;
la mise en place d'un capteur (220) dans le premier canal (120) ;
l'introduction d'un matériau durcissable (420) via le deuxième canal (140) jusqu'à l'intérieur du premier canal (120) afin de noyer au moins une partie du capteur (220) ; et
le durcissement du matériau durcissable (420) afin de maintenir le capteur (220) en place dans le premier canal.

16. Procédé selon la revendication 15, la formation du premier canal (120) et/ou la formation du deuxième canal (140) s'effectuant au cours de l'utilisation d'une technique de fabrication additive pour la formation du corps métallique (110).
